# EUROPÄISCHE PATENTSCHRIFT

(11) **EP 0 758 607 B1**
(45) Veröffentlichungstag und Bekanntmachung des Hinweises auf die Patenterteilung: **25.02.2004**
(21) Anmeldenummer: 96112836.0
(22) Anmeldetag: 09.08.1996
(51) Int. Cl.: B64C 1/00, B64C 3/20

(54) **Flügel mit schubsteifen Flügelschalen aus Faserverbundwerkstoffen für Luftfahrzeuge**
Shear-proof aircraft wing box formed from fibre reinforced material
Caisson d'aile d'avion résistant à la poussée formé de matériaux composites renforçés par des fibres

(30) Priorität: 11.08.1995 DE 19529476
(43) Veröffentlichungstag der Anmeldung: 19.02.1997
(73) Patentinhaber: Deutsches Zentrum für Luft- und Raumfahrt e.V., 53175 Bonn (DE)
(72) Erfinder: Piening, Matthias, 38100 Braunschweig (DE); Pabsch, Arno, 38104 Braunschweig (DE); Sigle, Christof, 38104 Braunschweig (DE)
(74) Vertreter: Einsel, Martin, Dipl.-Phys.

(56) Entgegenhaltungen:
- EP-A- 0 217 315
- EP-A- 0 502 621
- EP-A- 0 566 088
- DE-A- 3 418 110
- DE-A- 19 529 706
- FR-A- 2 440 831
- GB-A- 2 072 579

## Beschreibung

Die Erfindung bezieht sich auf einen Flügel mit schubsteifen Flügelschalen aus Faserverbundwerkstoffen, insbesondere faserverstärkten Kunststoffen, für Luftfahrzeuge, bei dem auf der Innenseite der Flügelschalen Zug- und Druckkräfte aufnehmende Elemente angebracht sind, die sich in Längsrichtung des Flügels erstreckende unidirektionale Fasern aufweisen.

Schalenbauteile der genannten Art bestehen im allgemeinen aus der Flügelhaut und damit verbundenen Stringern. Längskräfte werden dabei sowohl durch die Haut als auch die Stringer übertragen. Die Stringer oder sonstige die Biegesteifigkeit erhöhende Elemente werden bei beispielsweise aus der DE 36 14 618 A1 bekannten Flügeln mit der Flügelhaut verklebt. Eine Verklebung führt jedoch zu Problemen, die die Schadenstoleranz der Schale betreffen, und zwar insbesondere das partielle Ablösen einzelner Stringer von der Flügelschale infolge von Stoßbelastungen (Impact-Belastungen) und die sich anschließende Schadensfortpflanzung an einer beschädigten Stelle. Haut-Stringer-Verbindungen werden im allgemeinen daher vielfach zusätzlich zur Klebverbindung durch Niete gesichert.

In der DE 43 29 744 C1 ist ein Flügel beschrieben, bei dem zur Erzielung der erforderlichen Biegesteifigkeit Stäbe mit einer rohrförmigen Wandung aus Faserverbundwerkstoff auf einem Kem aus Schaumstoff mit wenigstens einer Lage aus achsparallelen unidirektionalen Fasem und einem darüberliegenden Gewebeschlauch mit sich unter einem Winkel zur Achse des Stabes kreuzenden Fasem verwendet werden.

Diese Stäbe, welche bei dieser Konstruktion auch als Stringer wirken, sind jeweils paarweise oder in Dreierbündeln mit einer schubsteifen Umhüllung versehen und nebeneinander liegend auf der Innenseite der Flügelschale aufgeklebt. Die Stäbe sind dabei an der Wurzel des Flügels mit rotationssymmetrischen Anschlußelementen zum axialen Einleiten von Zug- und Druckkräften versehen, die mit einem koaxialen Anschlußgewinde versehen sind. Konstruktionsbedingt werden die Stäbe dabei so angeordnet, daß die Achsen senkrecht zur Flügelwurzelrippe stehen. Damit ist die Wahl der Lage der gerade ausgebildeten Stäbe innerhalb der Flügelschale aber begrenzt. Die Anwendung dieser Konstruktion ist also auf Flügel beschränkt, bei denen ein entsprechender Teil der Stäbe sich rechtwinklig zur Flügelspitze erstrecken kann.

Auch bei der DE 43 29 744 C1 wird mit Klebverbindungen gearbeitet.

Dokument FR 2 440 831 offenbart ein Flügel mit schubsterten Flügelschalen aus Fasenverbundwerkstoffen gemäß dem Oberbegriff des Anspruchs 1.

Aufgabe der Erfindung ist es, einen Flügel der gattungsgemäßen Art so auszubilden, daß dieser einschließlich aller Versteifungen im wesentlichen ohne Klebverbindungen herstellbar ist.

Diese Aufgabe wird gemäß der Erfindung gelöst durch einen Flügel mit schubsteifen Flügelschalen aus Faserverbundwerkstoffen, insbesondere faserverstärkten Kunststoffen für Luftfahrzeuge,
bei dem auf der Innenseite der Flügelschalen Zug- und Druckkräfte aufnehmende Elemente angebracht sind, die sich in Längsrichtung des Flügels erstreckende unidirektionale Fasern aufweisen,
bei dem auf der Innenseite der Flügelschalen in Längsrichtung des Flügels in Abstand voneinander Stringer ausgebildet sind, deren Faseranteil durch ein Fasergelege gebildet ist, das mit dem Fasergelege der Flügelschale verbunden ist,
bei dem zwischen in Abstand voneinander liegenden Stringern unidirektionale Faserbündel angeordnet sind, die in die Kunstharzmatrix der Flügelschalen schubsteif eingebettet sind, sich in Längsrichtung des Flügel erstrecken und einen im wesentlichen rechteckförmigen Querschnitt aufweisen.

Im Gegensatz zu der Konzeption in der DE 43 29 744 C1 werden edindungsgemäß also nicht unidirektionale Fasern zu Stäben kombiniert und als Stringer eingesetzt.

Die Stringer sind im Gegenteil nun aus einem Faseranteil aus einem Fasergelege gebildet, das mit dem Fasergelege der Flügelschale verbunden, besonders bevorzugt sogar durch Faltung wenigstens einer Faserlage der Torsionshaut der Flügelschale gebildet ist.

Es entsteht so ein Flügel, bei dem die Fasern der Flügelhaut, die unidirektionalen Verstärkungen und die Stringer mit ihren Fasergelegen in eine Kunstharzmatrix eingebettet sind. Es handelt sich also insgesamt um Bauteile, die einstückig in einem einzigen Arbeitsgang hergestellt werden können, wobei für das Tränken der trockenkonfektionierten Fasergelege vorzugsweise ein Harzinjektionsverfahren verwendet wird.

Es entstehen so praktisch monolithisch hergestellte Flügel.

Die eingesetzten bevorzugten faserverstärkten Kunststoffe sind besonders bevorzugt kohlenstoffaserverstärkte Kunststoffe.

Zur weiteren Stabilitätserhöhung wird bevorzugt der Raum zwischen zwei Stringern zur Aufnahme einer Mehrzahl von Faserbündeln durch sich parallel zu den Stringern erstreckende Zwischenwände in der Breite unterteilt. Die entstehenden Teilbereiche der unidirektionalen Faserbündel sind dadurch jeweils ihrerseits von im wesentlichen rechteckförmigen Querschnitt.

Zweckmäßige Ausgestaltungen der Erfindung sind Gegenstand der Unteransprüche.

Flügel gemäß der Erfindung lassen sich in besonders zweckmäßiger Art durch eine Harzinjektion der trocken konfektionierten Faseranteile herstellen.

Durch die Einbettung aller Faseranteile in die Kunstharzmatrix der Flügelschalen wird in Verbindung mit der konstruktiven Ausbildung der sich in Längsrichtung des Flügels erstreckenden unidirektionalen Faserbündel eine hohe Schadenstoleranz erzielt. Die konstruktive Auslegung der Faserbündel ist dabei so zu wählen, daß auch bei Zerstörung einer vorgegebenen Anzahl von Faserbündeln die Flug- und Manövrierfähigkeit des Luftfahrzeugs gewahrt bleibt.

Die Erfindung ist in der Zeichnung beispielsweise veranschaulicht und im nachstehenden im einzelnen anhand der Zeichnung beschrieben. Es zeigen:
- **Figur 1**: eine Draufsicht auf einen Flügel;
- **Figur 2**: eine Draufsicht auf die Innenseite einer Flügelschale im Bereich des Flügelholms;
- **Figur 3**: einen Schnitt im Bereich der Schnittlinie III-III in Fig. 2;
- **Figur 4**: einen Schnitt im Bereich der Schnittlinie IV-IV in Fig. 2,
- **Figur 5**: einen Schnitt im Bereich der Schnittlinie V-V in Fig. 2;
- **Figur 6**: einen Schnitt im Bereich der Schnittlinie VI-VI in Fig. 2;
- **Figur 7**: einen Querschnitt ähnlich den Schnitten III-III bis V-V mit verschiedenen konstruktiven Detailmöglichkeiten;
- **Figur 8**: einen Schnitt ähnlich V-V in Fig. 2; und
- **Figur 9**: in perspektivischer Darstellung einen Querschnitt durch eine weitere Ausführungsform.

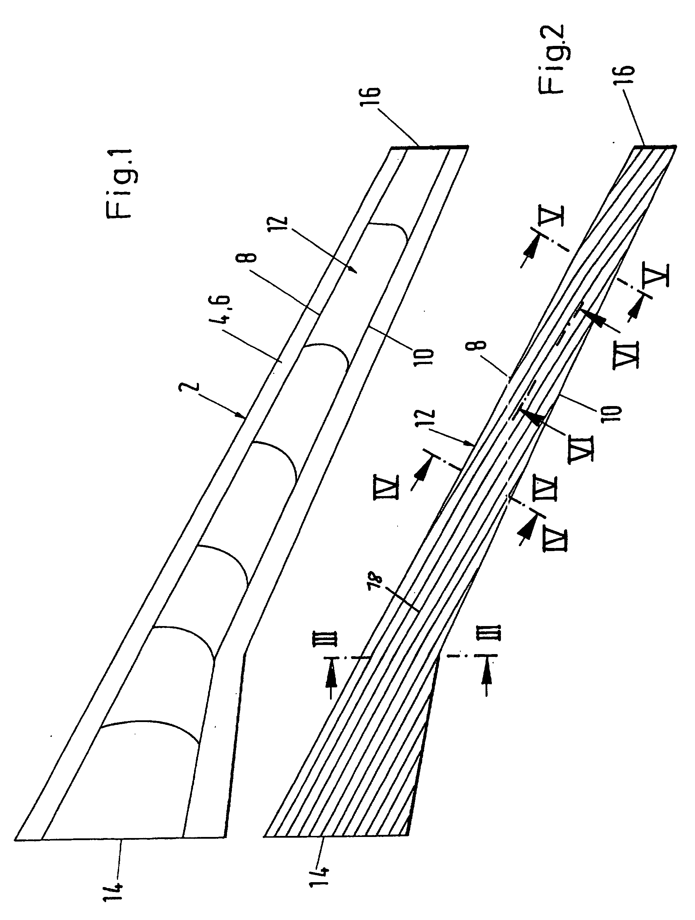

Der in **Fig.** 1 in Draufsicht dargestellte Flügel 2 weist eine obere und eine untere Flügelschale 4, 6 auf. Diese Flügelschalen sind neben in der Zeichnung nicht dargestellten Querrippen durch Längswände 8,10 miteinander verbunden, durch die ein Flügelholmkasten 12 gebildet ist. Die Haut der Flügelschalen 4, 6 ist in bekannter Weise schubsteif ausgebildet, wobei, wie durch die sich krümmenden Linien angedeutet, die Schubsteifigkeit von der Flügelwurzel 14 ausgehend zur Flügelspitze 16 abnehmend ausgebildet sein kann. Auf der Innenseite der Flügelschalen, von denen in Fig. 2 die untere Flügelschale 4 schematisch im Bereich des Holmkastens 12 dargestellt ist, sind unidirektionale Steifigkeiten zwischen jeweils zwei Stegelementen, die durch die in der Zeichnung erscheinenden Längslinien - zum Beispiel 18 - angedeutet sind, vorgesehen. Diese unidirektionalen Steifigkeiten, auf die weiter unten einzugehen sein wird, verlaufen im wesentlichen parallel, können aber in den jeweils aneinander anschließenden Bereichen eine von der Orientierung im Wurzelbereich abweichende Orientierung erfahren. Durch diese Änderung der Orientierung, ggf. in Verbindung mit den entsprechenden Abstufungen der Torsionshaut, auch hinsichtlich der Richtung der Fasern in der Torsionshaut, läßt sich nach dem Prinzip des Aeroelastic-Tailoring eine Anpassung an die aerodynamische Beanspruchung des Flügels erzielen, beispielsweise durch eine entsprechende Zug- bzw. Biege-Drill-Kopplung.

Die Flügel können wie in **Fig. 1** und **2** dargestellt gepfeilt ausgebildet sein, und zwar sowohl vorwärts als auch rückwärts gepfeilt. Die Erfindung ist aber auch auf ungepfeilte Flügel anwendbar.

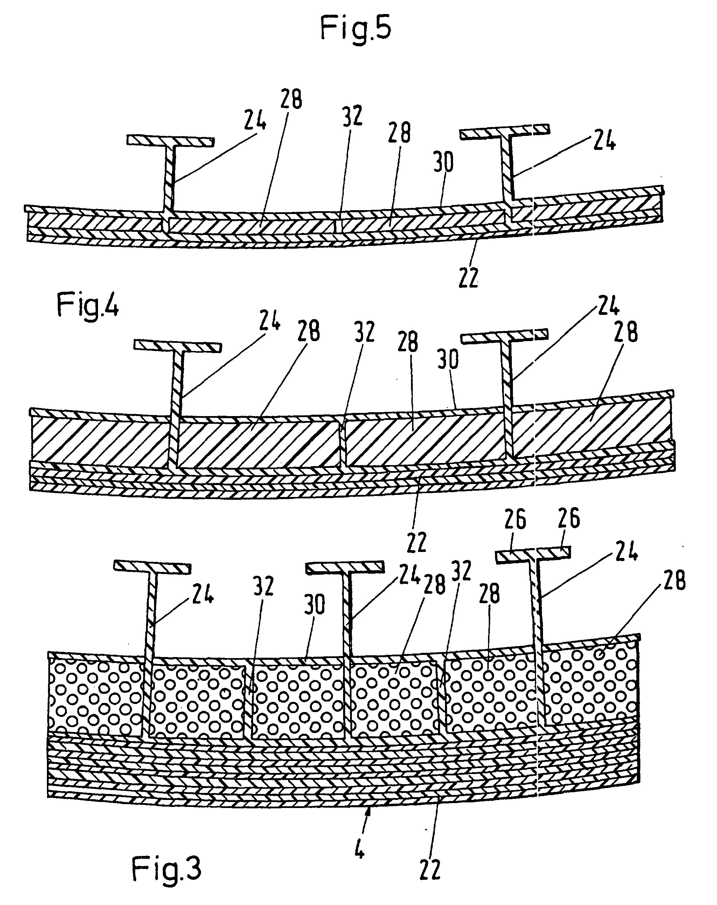

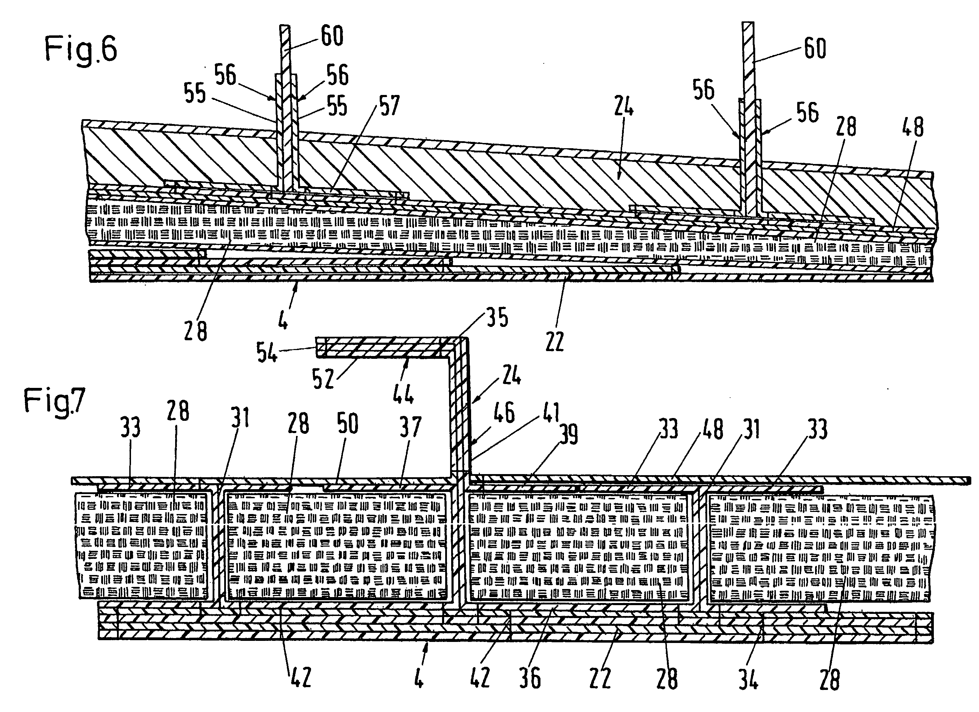

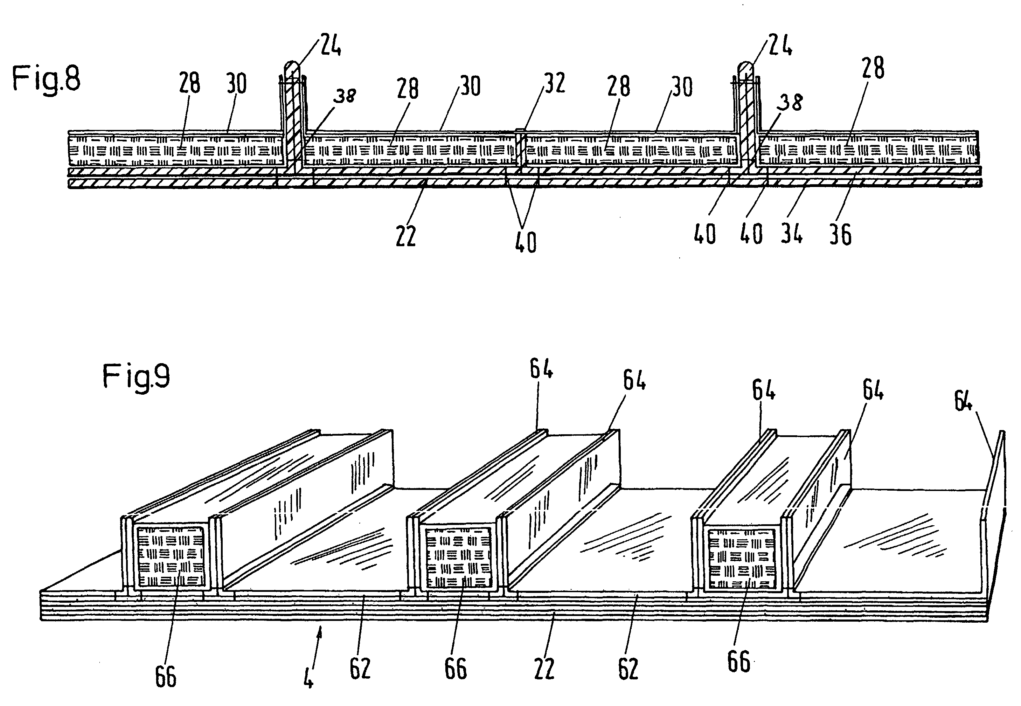

Die Flügelschalen 4, 6, von denen in den **Fig. 3** bis **9** jeweils Schnitte durch die untere Flügelschale 4 dargestellt sind, weisen Schichtungen von Fasergelegen 22 auf, deren Fasem entsprechend der gewünschten Schubsteifigkeit im wesentlichen unter einem Winkel von +/- 45° zur Längserstreckung der Flügelschalen orientiert sind. Diese Gelege sind miteinander vemäht, wie im einzelnen in den **Fig. 7** und **8** dargestellt und unter Bezug auf diese Figuren weiter unten beschrieben. Die Nähfäden sind hochfeste Fasem, insbesondere Kohlenstoffoder Aramidfasern.

Auf der Oberseite der Schale 4 sind an die Schale Stringer 24 angeformt, die hier an ihrem oberen Ende mit seitlich abstehenden Flanschen 26 T-förmig ausgebildet dargestellt sind. Im Bereich zwischen benachbarten Stringern 24 sind jeweils Faserbündel 28 aus unidirektionalen Fasem angeordnet, die sich in Längsrichtung der Flügelschalen, also in Richtung der Längslinien 18 in Fig. 2 erstrecken. Über den Faserbündeln ist eine obere Decklage 30 vorgesehen, deren Faserorientierung so gewählt ist, daß eine erhöhte Querbiegesteifigkeit erreicht wird. Bei dem dargestellten Ausführungsbeispiel sind zwischen zwei Stringern 24 jeweils zwei Faserbündel 28 angeordnet, zwischen denen eine Trennwand 32 angeordnet ist, deren Höhe der Höhe der Faserbündel 28 entspricht. Die Trennwände 32 sind ebenfalls mit den Gelegen der Schale 4 vernäht.

Flansche an den oberen Enden der Stringer erhöhen das Widerstandsmoment und die Knickfestigkeit. Die Stringer bzw. flanschlose Stringer können auch zur Befestigung von Bauteilen dienen, beispielsweise der Längswände des Flügelholmkastens.

Der Querschnitt der Faserbündel wird entsprechend den in den jeweiligen Bereichen des Flügels geforderten Biegesteifigkeiten gewählt. Der Querschnitt verringert sich damit vom Bereich der Flügelwurzel 14 zum Bereich der Flügelspitze 16. Bei parallel angeordneten Stringern 24 mit gleichem Abstand ändert sich damit die Höhe der Faserbündel, wie aus den Fig. 4 und 5 ersichtlich. Dabei wird gleichzeitig die Dicke der Flügelhaut reduziert.

Die Fasem der Flügelhaut 22, also des Fasergeleges der Stringer 24, der Faserbündel 28 und ggf. der Trennwände 32 und der Decklage 30 sind gemeinsam in einer Kunstharzmatrix eingebettet. Vorzugsweise wird der Faseranteil der Flügelschale 4, 6 trocken konfektioniert und der Flügel 2 anschließend durch ein Harzinjektionsverfahren fertiggestellt.

In **Fig. 8** sind für die Faserschichtung zw. das Fasergelege 22 der Flügelschale 4 zwei Gelegelagen 34, 36 dargestellt. Die obere Gelegelage 36 kann aus Gelegestreifen zusammengesetzt sein, die zur Bildung der Stringer 24 aufgefaltet sind. Damit kann auch bei zugespitzten gekrümmten Flügelschalen die Fertigung erleichtert werden ohne Beeinträchtigung der Festigkeit der Struktur. Die Falten können im Fußbereich durch Heftungen 38 miteinander verbunden sein. Im Fußbereich sind im unmittelbaren Bereich der Faltungen die beiden Gelegelagen 34, 36 durch senkrechte Nähte 40 miteinander verbunden. Diese können bei mehr als zwei Gelegelagen der Torsionshaut, wie sie üblicherweise vorgesehen sind, auch durch weitere darunter liegende Gelegelagen hindurchgreifen. Die im Fußbereich der Falten angeordneten Nähte sichern den Stringer 24 gegen Ablösung durch senkrecht zur Ebene der Schale wirkende Kräfte. Die Aufgabe der horizontalen und der senkrechten Vemähung kann vorteilhaft auch durch eine schräge Vemähung im Fußbereich der Stringer 28 vorgenommen werden.

Wie in den **Fig. 3 bis 5** dargestellt, sind zwischen zwei Stringem 24 zwei Faserbündel 28 angeordnet, zwischen denen eine Zwischenwand 32 angeordnet ist. Diese Zwischenwand 32 ist ebenfalls vorzugsweise durch eine Falte der oberen Gelegelage 36 gebildet, und wie die Stringer ist diese Falte am Fuß durch Nähte mit darunter liegenden Gelegelagen verbunden. Die Zwischenwände 32 unterstützen die schubsteife Verbindung der Faserbündel untereinander und deren Anbindung an die Flügelschale.

Die Faserbündel 28 sind vorzugsweise mit einer schubsteifen Ummantelung versehen. In **Fig. 8** sind die Faserbündel 28 mit einer oberen Abdeckung bzw. Decklage 30 versehen dargestellt, die an den Seiten der die Stringer 24 bildenden Falten hochgeführt sind, um dadurch die Querkräfte in die Stringer abzuleiten und gleichzeitig die Stringer zu verstärken. Das Fasergelege 22 ist vorzugsweise auch außerhalb der Nähte am Fußpunkt der die Stringer bildenden Falten flächig miteinander vernäht.

**In Fig. 7** sind vier durchgehende Gelegelagen für das Fasergelege 22 vorgesehen, die über senkrechte Nähte 42 miteinander verbunden sind. Die die Zwischenwand 32 bildende Falte ist hier aufgeschnitten und seitlich als Abdeckung 33 über die beiden benachbarten Faserbündel 28 gelegt. Die den Stringer 24 bildende Falte ist so aufgeschnitten dargestellt, daß eine Schicht 35 sich bis zum Ende des hier einseitig abgewinkelten Schenkels 44 erstreckt, während der andere Schenkel 37 der Falte über das benachbarte Faserbündel 28 gelegt ist. Für das rechts des Stringers 24 dargestellte Faserbündel 28 ist als Abdeckung 39 ein Gelegestreifen 46 vorgesehen, der mit einem aufrechten Schenkel 41 gegen den Stringer anliegt. Rechts vom Stringer ist weiter eine Gelegelage 48 dargestellt, die sich auf den Abdeckungen 33 der Faserbündel aufliegend zwischen zwei benachbarten Stringern erstrecken kann. Links des Stringers ist eine Ausführung dargestellt, bei der eine eine solche Abdeckung bildende Gelegelage 50 am Stringer 24 aufwärts geführt ist und bei dem Ausführungsbeispiel oben abgewinkelt eine untere Gelegelage 52 des abgewinkelten Schenkels 44 des Stringers 24 bildet. Zwischen dieser Gelegelage 52 und der durch die Auffaltung gebildeten oberen Gelegelage kann einen Gelegelage 54 vorgesehen sein, durch die eine unidirektionale Flanschverstärkung in Längsrichtung des Stringers bewirkt wird.

Die in **Fig. 7** dargestellten Möglichkeiten der Ausbildung der Stringer und der Abdeckungen der Faserbündel aus unterschiedlichen Gelegelagen sollen die Variabilität aufzeigen, mit der Flügelschalen gemäß der Erfindung aufgebaut werden können.

**Fig. 6** zeigt in einem Längsschnitt die Ausbildung von Anschlüssen für Querrippen bei gemäß der Erfindung ausgebildeten Flügelschalen. Auf der Abdeckung 48 der Faserbündel 28 sind zwischen jeweils zwei Stringem 24 in Querrichtung der Flügelschale 4 zwei winkelförmig ausgebildete Gelegestreifen 56 vorgesehen, die mit einem Schenkel 57 auf der Abdeckung 48 und über senkrechte Nähte 58 mit dieser vernäht sind. Die aufrechten Schenkel 55 können durch eine Faltung gebildet werden. Zwischen den aufrechten Schenkeln 55 der Streifen 56 ist hier ein weiterer Gelegestreifen 60 angeordnet, an dem die nicht dargestellte Rippe befestigt werden kann.

Die winkelförmigen Streifen 56 und der Streifen 60 sind so ausgebildet, daß die Stringer 24 von ihnen überbrückt werden. An die Stringer angrenzend können Durchlaßöffnungen vorgesehen werden, beispielsweise um im Tankbereich eines "nassen" Flügels den Treibstoff ungehindert durch die Bereiche der Rippenbefestigung hindurchströmen zu lassen.

In **Fig. 6** ist die Abstufung der Gelegelagen 22, die die torsionssteife Flügelhaut bilden, in Längsrichtung der Flügelschale 4 schematisch dargestellt.

Bei den vorstehend beschriebenen Ausführungsformen sind die die unidirektionalen Steifigkeiten bildenden Faserbündel 28 im Bereich des Holmkastens unmittelbar nebeneinanderliegend dargestellt, so daß diese Steifigkeiten die Flügelschale im Bereich des Holmkastens vollflächig abdecken. Durch diese flächige Anordnung der Steifigkeiten mit den dazwischen liegenden Trennungen durch Trennwände bzw. Stringer wird für diese Steifigkeiten eine hohe Schadenstoleranz erreicht. Schäden in einem der Faserbündel können sich dabei nicht in andere Faserbündel fortsetzen und damit Risse erzeugen. Die Schadenstoleranz wird dabei durch eine große Anzahl nebeneinanderliegender Faserbündel gesteigert. Eine Schadenseingrenzung erfolgt dabei weiter durch eine schubsteife Ummantelung der einzelnen Faserbündel, über die die Kräfte auch auf benachbarte Steifigkeiten übertragen und damit seitlich um Schadensstellen herumgeleitet werden können.

Bei der beschriebenen Anordnung sind die Tragfunktionen, also ist die Aufnahme der Zug- und Druckkräfte, von den Torsionskräften, die von der Flügelschale aufgenommen werden, weitgehend entkoppelt, es sind daher keine multidirektionalen Laminate erforderlich. Die Steifigkeitsanpassung kann durch Querschnittsänderungen der unidirektionalen Faserbündel nahezu stufenlos vorgenommen werden. Die unidirektionalen Steifigkeiten der Faserbündel können weiter nach aeroelastischen Gesichtspunkten orientiert werden.

Bei Flügeln mit geringeren Festigkeitsanforderungen, beispielsweise bei kleineren Flugzeugen, etwa auch bei Segelflugzeugen, ist es nicht erforderlich, unidirektionale Steifigkeiten vollflächig auf der Innenseite der Flügelschale 4,6 anzuordnen. Solche unidirektionalen Steifigkeiten können daher auch im Abstand voneinander entsprechend den Steifigkeitsanforderungen angeordnet werden, wie in Fig. 9 dargestellt. Bei dieser Ausführung sind durch Auffaltung der obersten Gelegelage 62 in der oben beschriebenen Weise jeweils aus zwei Schichten gebildete Wände 64 gebildet, zwischen denen jeweils die unidirektionalen Steifigkeiten in Form von Faserbündeln 66 untergebracht sind, die hier mit einer Abdeckung 68 dargestellt sind, durch die eine allseitige schubsteife Umhüllung der Faserbündel erzielt wird. Soweit aus Steifigkeitsgründen erforderlich, können einzelne der Wände 64 auch als über die Oberseite der Faserbündel vorstehende Stringer ausgebildet sein.

Flügelschalen gemäß der Erfindung sind homogene Bauelemente mit geringer Wandstärke. Sie sind daher einfach und mit hoher Sicherheit durch zerstörungsfreie Prüfverfahren wie Ultraschallprüfung prüfbar.

Durch die oben erwähnten Nähte oder Vemähungen wird Sicherheit gegen eine Delaminierung der Gelegelagen gegeben. Die in der Matrix eingebetteten Nähfäden sind so in die Gelegelagen einzubringen, daß die Fäden in Richtung der örtlichen Beanspruchung im Bereich der Nähte verlaufen. Im Fuß der Stringer und der Zwischenwände können die Fäden daher auch schräg in den Gelegelagen verlaufen.

Nähte mit Verschlingungen von zwei Nähfäden, wie sie üblicherweise durch Nähmaschinen erzeugt werden, können zu einer Schwächung der Gelege führen, insbesondere durch Ondulation der Fasem der Gelege im Bereich der Gelegeoberflächen zu Festigkeitsverlusten. Um Delaminationen entgegenzuwirken, ist eine Verschlingung der Nähfäden nicht erforderlich. Es genügen vielmehr spannungsfrei in die Gelegelagen eingestochene Fäden, Fadenschlingen oder Fadenabschnitte, wie in der EP 0 556 088 B1 oder in der nachveröffentlichten deutschen Patentanmeldung 196 29 044.9 beschrieben.

## Patentansprüche

1. Flügel mit schubsteifen Flügelschalen (4,6) aus Faserverbundwerkstoffen, insbesondere faserverstärkten Kunststoffen für Luftfahrzeuge,
bei dem auf der Innenseite der Flügelschalen (4,6) in Längsrichtung des Flügels (2) in Abstand voneinander Stringer (24) ausgebildet sind, deren Faseranteil durch ein Fasergelege gebildet ist, das mit dem Fasergelege (22) der Flügelschale (4,6) verbunden ist,
**dadurch gekennzeichnet, daß**
zwischen in Abstand voneinander liegenden Stringern (24) als unidirektionale Steifigkeiten Faserbündel (28) angeordnet sind, die in die Kunstharzmatrix des Flügelschalen (4,6) schubsteif eingebettet sind, sich in Längsrichtung des Flügels (2) erstrecken und einen im wesentlichen rechteckförmigen Querschnitt aufweisen.

2. Flügel nach Anspruch 1,
**dadurch gekennzeichnet,**
**daß** das Faservolumen der Faserbündel (28) von der Wurzel (14) der Flügelschalen (4,6) zu deren Spitze (16) entsprechend den Steifigkeitsanforderungen abnimmt.

3. Flügel nach Anspruch 1 oder 2,
**dadurch gekennzeichnet,**
**daß** das Faservolumen der Fasergelege (22) der Flügelschale (4,6) von der Wurzel (14) der Flügelschalen (4,6) zu deren Spitze (16) entsprechend den Steifigkeitsanforderungen variiert.

4. Flügel nach einem der vorhergehenden Ansprüche,
**dadurch gekennzeichnet,**
**daß** der Raum zwischen zwei Stringern (24) zur Aufnahme einer Mehrzahl von Faserbündeln (28) durch sich parallel zu den Stringern (24) erstreckende Zwischenwände (32) in der Breite unterteilt wird.

5. Flügel nach Anspruch 4,
**dadurch gekennzeichnet,**
**daß** die Höhe der Trennwände (32) im wesentlichen der jeweiligen Höhe der Faserbündel (28) entspricht.

6. Flügel nach einem der vorhergehenden Ansprüche,
**dadurch gekennzeichnet,**
**daß** der Faseranteil der Stringer (24) und/oder der Zwischenwände (32) durch Faltung wenigstens der inneren Faserlage (36) der Torsionshaut der Flugschale (4,6) gebildet ist.

7. Flügel nach Anspruch 6,
**dadurch gekennzeichnet,**
**daß** der Faseranteil der Stringer (24) und/oder der Zwischenwände (32) durch Gelegestreifen gebildet ist, die mit dem Fasergelege der Torsionshaut der Flügelschale vernäht sind.

8. Flügel nach Anspruch 6,
**dadurch gekennzeichnet,**
**daß** die die Falten bildenden Fasergelege wenigstens mit den inneren Fasergelegen der Flügelschale am Fuß der Falten vernäht sind.

9. Flügel nach einem der Ansprüche 6 bis 8,
**dadurch gekennzeichnet,**
**daß** die Trennwände (32) an ihrem oberen Rand mit auf der Oberseite der Faserbündel (28) aufliegenden Gelegeabschnitten (30) versehen sind.

10. Flügel nach einem der vorhergehenden Ansprüche,
**dadurch gekennzeichnet,**
**daß** die Faserbündel (28) auf ihrer Oberseite durch ein Fasergelege (42) mit sich zur Längserstreckung der Faserbündel (28) kreuzenden Fasern abgedeckt sind.

11. Flügel nach Anspruch 10,
**dadurch gekennzeichnet,**
**daß** mit dem die Abdeckung bildenden Fasergelege winkelförmig gefaltete Fasergelege (56) vemäht sind, welche sich quer zu den Fasersträngen (28) in Profilrichtung erstrecken, die aufrechten Schenkel der Stringer (24) übergreifen und den Faseranteil von Befestigungsleisten (60) für die Rippen des Flügels bilden.

## Claims

1. A wing with wing shells (4, 6) with good shear strength made of fibrous composite materials,
particularly fibre-reinforced plastics, for aircraft,
wherein spaced stringers (24) are made on the inside of the wing shells (4, 6) and longitudinally of the wing (2), their fibre component being formed by a fibre ply which is joined to the fibre ply (22) of the wing shell (4, 6),
**characterised in that**
fibre bundles (28) are arranged between spaced stringers (24) as unidirectional stiffening elements, the bundles being embedded with good shear strength in the synthetic resin matrix of the wing shell (4, 6), extending longitudinally of the wing (2) and having a substantially rectangular cross-section.

2. The wing of claim 1,
**characterised in that**
the fibre volume of the fibre bundles (28) decreases from the root (14) of the wing shells (4, 6) to their tip (16) according to the stiffness requirements.

3. The wing of claim 1 or 2,
**characterised in that**
the fibre volume of the fibre plies (22) of the wing shell (4, 6) varies from the root (14) of the wing shells (4, 6) to their tip (16) according to the stiffness requirements.

4. The wing of any of the preceding claims,
**characterised in that**
the space between two stringers (24) is divided widthwise by intermediate walls (32) extending parallel with the stringers (24) to receive a plurality of fibre bundles (28).

5. The wing of claim 4,
**characterised in that**
the height of the dividing walls (32) substantially corresponds to the respective height of the fibre bundles (28).

6. The wing of any of the preceding claims,
**characterised in that**
the fibre component of the stringers (24) and/or of the intermediate walls (32) is formed by folding at least the inner fibre ply (36) of the torsion skin of the wing shell (4,6).

7. The wing of claim 6,
**characterised in that**
the fibre component of the stringers (24) and/or of the intermediate walls (32) is formed by strips of ply which are sewn onto the fibre ply of the torsion skin of the wing shell.

8. The wing of claim 6,
**characterised in that**
at least the inner fibre plies of the wing shell are sewn onto the fibre plies forming the folds, at the foot of the folds.

9. The wing of any of claims 6 to 8,
**characterised in that**
the dividing walls (32) are provided at their upper edge with sections of ply (30) which lie on top of the fibre bundles (28).

10. The wing of any of the preceding claims,
**characterised in that**
the fibre bundles (28) are covered on the outside by a fibre ply (42) with fibres extending across the longitudinal direction of the bundles (28).

11. The wing of claim 10,
**characterised in that**
fibre plies (56) folded at an angle are stitched to the fibre ply forming the cover (48), the folded plies (56) extending transversely to the fibre strands (28).in the direction of the profile, engaging over the upright limbs of the stringers (24) and forming the fibre component of attachment strips (60) for the ribs of the wing.

## Revendications

1. Aile avec des enveloppes d'aile rigides à la poussée (4,6) en matériaux composites renforcés par des fibres, en particulier des matières plastiques renforcées au laser, pour avions, dans laquelle des raidisseurs (24), dont la portion de fibres est formée par un non tissé de fibres qui est combiné au non tissé de fibres (22) de l'enveloppe d'aile (4,6), sont formés sur le côté intérieur des enveloppes d'aile (4,6) dans le sens longitudinal de l'aile (2) à distance les uns des autres, **caractérisée en ce que** des faisceaux de fibres (28), qui sont encastrés de manière rigide à la poussée dans la matrice en résine synthétique des enveloppes d'aile (4,6), sont disposés entre les raidisseurs (24) placés à distance les uns des autres comme rigidités unidirectionnelles, s'étendent dans le sens longitudinal de l'aile (2) et présentent une section transversale sensiblement rectangulaire.

2. Aile selon la revendication 1, **caractérisée en ce que** le volume de fibres du faisceau de fibres (28) diminue entre l'emplanture (14) des enveloppes d'aile (4,6) et leur extrémité (16) en fonction des exigences de rigidité.

3. Aile selon la revendication 1 ou 2, **caractérisée en ce que** le volume de fibres du non tissé de fibres (22) des enveloppes d'aile (4,6) varie entre l'emplanture (14) des enveloppes d'aile (4,6) et leur extrémité (16), en fonction des exigences de rigidité.

4. Aile selon l'une quelconque des revendications précédentes, **caractérisée en ce que** l'espace entre deux raidisseurs (24) est divisé dans la largeur par des cloisons de séparation (32) s'étendant parallèlement aux raidisseurs (24) pour loger une pluralité de faisceaux de fibres (28).

5. Aile selon la revendication 4, **caractérisée en ce que** la hauteur des cloisons de séparation (32) correspond sensiblement à la hauteur respective des faisceaux de fibres (28).

6. Aile selon l'une quelconque des revendications précédentes, **caractérisée en ce que** la portion de fibres dés raidisseurs (24) et/ou des cloisons de séparation (32) est formée par le pliage d'au moins la couche de fibres intérieure (36) de la peau de torsion de l'enveloppe d'aile (4,6).

7. Aile selon la revendication 6, **caractérisée en ce que** la portion de fibres des raidisseurs (24) et/ou des cloisons de séparation (32) est formée par des bandes de non tissé qui sont cousues avec le non tissé de fibres de la peau de torsion de l'enveloppe d'aile.

8. Aile selon la revendication 6, **caractérisée en ce que** les non tissés de fibres formant les plis sont cousus au moins avec les non tissés de fibres intérieurs de l'enveloppe d'ail au pied des plis.

9. Aile selon l'une quelconque des revendications 6 à 8, **caractérisée en ce que** les cloisons de séparation (32) sont munies, à leur bord supérieur, de tronçons de non tissé (30) posés sur le côté supérieur des faisceaux de fibres (28).

10. Aile selon l'une quelconque des revendications précédentes, **caractérisée en ce que** les faisceaux de fibres (28) sont recouverts, sur leur côté supérieur, par un non tissé de fibres (42) avec des fibres se croisant par rapport à l'extension longitudinale des faisceaux de fibres (28).

11. Aile selon la revendication 10, **caractérisée en ce que** des non tissés de fibres (56) pliés, qui s'étendent perpendiculairement aux faisceaux de fibres (28) dans la direction de profil, s'engrènent dans les montants droits des raidisseurs (24) et forment la portion de. fibres de baguettes de fixation (60) pour les nervures de l'aile, sont cousus avec le non tissé de fibres formant le recouvrement.
